# EUROPÄISCHE PATENTSCHRIFT

(11) **EP 0 718 164 B1**
(45) Veröffentlichungstag und Bekanntmachung des Hinweises auf die Patenterteilung: **09.08.2000**
(21) Anmeldenummer: 95119117.0
(22) Anmeldetag: 05.12.1995
(51) Int. Cl.: B60R 25/10, G08B 25/10, G08B 26/00

(54) **Objektschutz in einem Funksystem**
Object protection in a radio system
Protection d'objets dans un système de radiocommunications

(30) Priorität: 17.12.1994 DE 4445180
(43) Veröffentlichungstag der Anmeldung: 26.06.1996
(73) Patentinhaber: ALCATEL, 75008 Paris (FR)
(72) Erfinder: Ehlert, Erhart, D-71063 Sindelfingen (DE)
(74) Vertreter: Knecht, Ulrich Karl, Dipl.-Ing.

(56) Entgegenhaltungen:
- EP-A- 0 417 944
- EP-A- 0 501 058
- EP-A- 0 574 230
- DE-C- 4 243 415
- GB-A- 2 270 405
- US-A- 4 651 157
- US-A- 5 166 664
- PATENT ABSTRACTS OF JAPAN vol. 010, no. 353 (M-539), 28.November 1986 & JP-A-61 150853 (NISSAN MOTOR CO LTD), 9.Juli 1986,

## Beschreibung

Die Erfindung betrifft ein Verfahren zum Schützen eines Objektes, das mit einer für ein Funksystem verwendbaren Funkendeinrichtung ausgestattet ist, gemäß dem Oberbegriff des Anspruchs 1. Außerdem betrifft die Erfindung ein Funksystem, eine Zentrale und eine Funkendeinrichtung dafür gemäß dem Oberbegriff einer der nebengeordneten Ansprüche.

Aus US-A-5 166 664 ist ein Funksystem mit einer Zentrale und mit Funkendeinrichtungen (s. dort in Fig. 6 "Master Station" bzw. "Subscribe A.S.S.") bekannt. In dem dortigen Funksystem wird zum Schützen eines Objektes, das mit einer für ein Funksystem verwendbaren Funkendeinrichtung ausgestattet ist, wie etwa zum Schützen eine Taxi-Fahrzeugs, von der Zentrale ein Aufwärts-Funkkanal überwacht, auf dem die Funkendeinrichtung in vorgebbaren Zeitabständen an eine Funkfeststation eine Statusmeldung sendet (s. dort Spalte 1, Zeilen 36 bis 57). Falls die Statusmeldung nicht empfangen wurde, wird ein Alarm ausgelöst (s. dort Spalte 2, Zeilen 34 bis 42: "fail safe monitoring"). Es wird nicht beschrieben, wie und unter welchen Vorbedingungen in dem dortigen Funksystem das Verfahren "fail safe monitoring" begonnen wird.

Zum Schutz beweglicher Objekte, insbesondere zum Diebstahlschutz von Kraftfahrzeugen, ist aus EP 0 242 099 A2 ein Funksystem bekannt. Jedes zu schützende Kraftfahrzeug enthält einen GPS-Satellitenempfänger (GPS: Global Positioning System) zur Standortbestimmung und eine damit verbundene Funkendeinrichtung (Mobiltelefon). Wird das Kraftfahrzeug gestohlen, so stellt der GPS-Satellitenempfänger einen Standortwechsel fest und veranlaßt die Funkendeinrichtung dazu, eine Alarmmeldung an eine mit dem Funksystem verbundene Zentrale (Central Dispatch Office) zu senden. Der GPS-Satellitenempfänger dient demnach als Bewegungs-Detektor, der die Funkendeinrichtung im Alarmfall aktiviert. Es sind dort in EP 0 242 099 A2 weitere Detektoren beschrieben, die an die Funkendeinrichtung angeschlossen werden, wie etwa ein Ultraschall-Detektor oder ein Batteriestrom-Detektor. Demnach wird in dem bekannten Funksystem ein Alarm nur dann von der Zentrale empfangen, wenn alle technischen Elemente innerhalb der Alarmkette, d.h. Detektor, Funkendeinrichtung, Funkfeststationen und Übertragungseinrichtungen zur Zentrale, funktionstüchtig sind. Mit diesem aufwendigen Funksystem und dem durchgeführten Alarmierungsverfahren kann somit ein Objekt nicht sicher geschützt werden.

Aus EP 0 501 058 A2 sind ein Verfahren und Vorrichtungen zur Lokalisierung von sich in einem zellularen Mobilfunknetz bewegenden Fahrzeugen bekannt. Jedes Fahrzeug ist mit einem Mobiltelefon ausgestattet, daß an eine Basisstation Funknachrichten sendet, die Angaben über den momentanen Aufenthaltsbereich enthalten. Die Basisstation ist mit einer Mobilfunkvermittlungsstelle und einem daran angeschlossenen Zentralrechner verbunden, der Information über den Aufenthaltsort ausgibt und der die Reisezeit schätzt, die das Fahrzeug noch benötigen wird, um zum Zielort zu gelangen. Zum Schutz des Fahrzeuges gegen Diebstahl kann das Fahrzeug auch mit einem Alarm-System ausgestattet werden, das einen Navigationsempfänger für sogenannte LORAN-C-Positionssignale enthält. Im Falle eines Diebstahls wird das Mobiltelefon zum Senden eines Rufes veranlaßt, der eine Alarmmeldung für den Zentralrechner enthält. Das Mobiltelefon selbst sendet also die Alarmmeldung aus. Demnach darf für eine zur sicheren Überwachung des Fahrzeuges die Funkverbindung zur Basisstation nicht gestört oder unterbrochen sein. Wie die Alarmbereitschaft sicher und fehlerfrei hergestellt werden kann, ist dort nicht beschrieben.

Aufgabe der Erfindung ist es, ein Verfahren für den Objektschutz, ein Funksystem, eine Zentrale und eine Funkendeinrichtung dafür vorzuschlagen, die technisch einfach auszuführen sind und die für einen sicheren Objektschutz geeignet sind. Dabei sollen der Beginn der Alarmbereitschaft einfach zu kontrollieren sein und der Diebstahlschutz verbessert werden.

Gelöst wird die Aufgabe durch ein Verfahren mit den Merkmalen des Anspruch 1 und durch ein Funksystem, eine Zentrale und eine Funkendeinrichtung nach einem der nebengeordneten Ansprüche.

Erfindungsgemäß wird ein in Aufenthaltsbereiche unterteiltes zellulares Funksystem mit einer Zentrale vorgeschlagen, die eine von der Funkendeinrichtung gesendete erste Meldung empfängt, die angibt, daß die Überwachung gewünscht wird, und die nach dem Empfang der Statusmeldung prüft, ob sich der Aufenthaltsbereich verändert und die gleichfalls Alarm auslöst.

Dadurch kann der Beginn der Überwachung vom Objekt aus veranlaßt werden, indem etwa der Benutzer vor Verlassen des geparkten Fahrzeuges die erste Meldung an die Zentrale sendet. Die damit begonnene Alarmbereitschaft des Funksystems kann nicht durch leichte Manipulation, wie etwa durch Abschirmung der Sendeantenne der Funkeinrichtung, entschärft werden.

Vorteilhafte Ausgestaltungen der Erfindung sind den Unteransprüchen zu entnehmen.

Im weiteren wird die Erfindung anhand eines Ausführungsbeispiels und unter Zuhilfenahme folgender Figuren beschrieben:
Fig. 1, die schematisch das Funksystem in der Form eines zellularen Mobilfunksystems zeigt, und
Fig. 2 a und b, die ein Ablaufdiagramm des von der Zentrale des Mobilfunksystems gesteuerten Verfahrens zeigt.

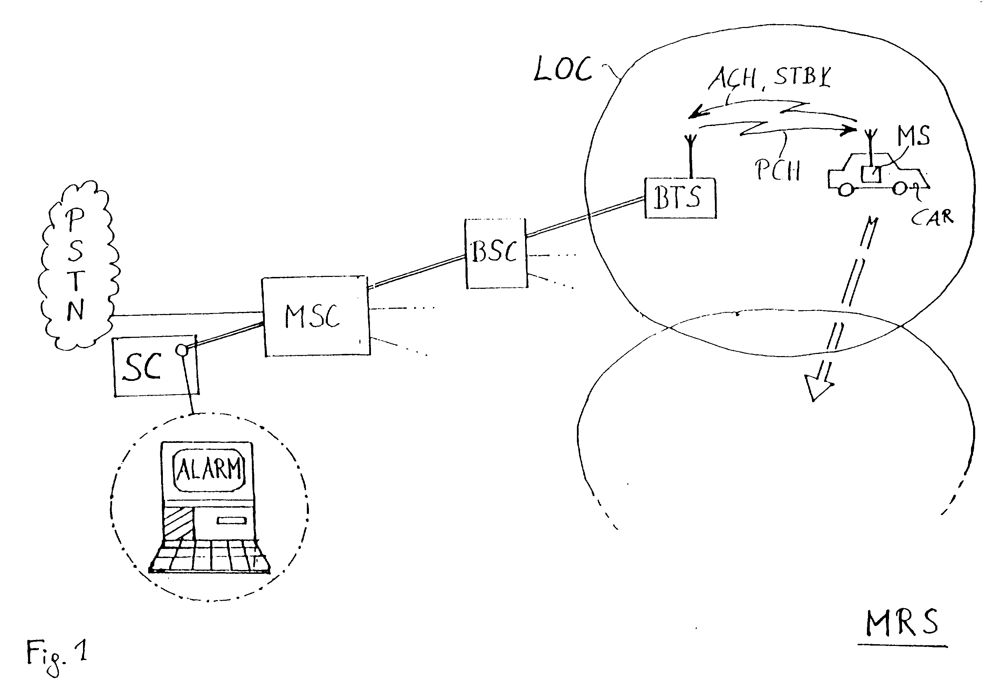

In Fig. 1 ist das erfindungsgemäße Funksystem in der Ausführung eines zellularen Mobilfunksystems MRS dargestellt, welches nach dem GSM-Standard ausgelegt ist (GSM: Global System for Mobile Communications). Das Mobilfunksystem MRS enthält eine an das öffentliche Fernsprechnetz PSTN angeschlossene Funkvermittlungsstelle MSC, daran angeschlossene Funkfeststationssteuerungen BSC und daran angeschlossene Funkfeststationen BTS zur Versorgung jeweils einer Funkzelle. Weiterhin enthält das Mobilfunksystem MRS eine mit der Funkvermittlungsstelle MSC verbundene Zentrale SC, die das erfindungsgemäße Verfahren zum Schutz eines Objektes, hier zum Diebstahlschutz eines Kraftfahrzeuges CAR, steuert.

Das Kraftfahrzeug CAR enthält dazu eine Funkendeinrichtung MS, hier eine herkömmliche GSM-Mobilstation, die über Funk eine Verbindung mit der nächstliegenden Funkfeststation BTS aufbauen kann. Fig. 1 zeigt zur Vereinfachung der Darstellung nur diese Funkfeststation BTS und die damit verbundene Funkfeststationssteuerung BSC. Die Funkzelle dieser Funkfeststation BTS entspricht hier einem Aufenthaltsbereich LOC, dessen Kennung eine sogenannte LAI (Location Area Identity) ist, welche für den Verbindungsaufbau benötigt wird. In diesem Beispiel umfaßt der Aufenthaltsbereich LOC nur eine Funkzelle, jedoch kann ein Aufenthaltsbereich auch zwei und mehr Funkzellen umfassen. Im GSM wird innerhalb eines sogenannten Location-Update-Verfahrens fortlaufend die Kennung des aktuellen Aufenthaltsbereichs ermittelt und der Funkvermittlungsstelle MSC mitgeteilt (s. hierzu etwa das Buch von M. Mouly et al. "The GSM-System for Mobile Communications", Kap. 7.1.1.4, Seiten 442-446, Eigenverlag, 49 rue Louise Bruneau, Paris, 1992).

Im nachfolgend beschriebenen Verfahren zum Diebstahlschutz des in dem Aufenthaltsbereich LOC geparkten Kraftfahrzeuges CAR wird zum einen geprüft, ob die sich im Kraftfahrzeug befindende Funkendeinrichtung MS funktionstüchtig ist, und zum zweiten geprüft, ob das Fahrzeug unerlaubt aus dem Aufenthaltsbereich LOC entfernt wird. Dadurch wird sowohl eine Manipulation an der Funkendeinrichtung MS als auch ein Diebstahl des Kraftfahrzeuges CAR einfach und schnell festgestellt. Um eine genauere Überwachung des Standortes des zu schützenden Objektes zu erzielen, ist es auch denkbar, die Funkendeinrichtung mit einem Navigationsgerät, z.B. mit einem GPS-Empfänger, zu verbinden. Durch Verwendung eines GPS-Empfängers ist eine hohe Auflösung von wenigen Metern erzielbar. Es ist auch denkbar, daß kontinuierlich der von dem Navigationsgerät ermittelte Standort innerhalb der Statusmeldung an die Zentrale gesendet wird, die dann prüft, ob eine Standortveränderung erfolgt.

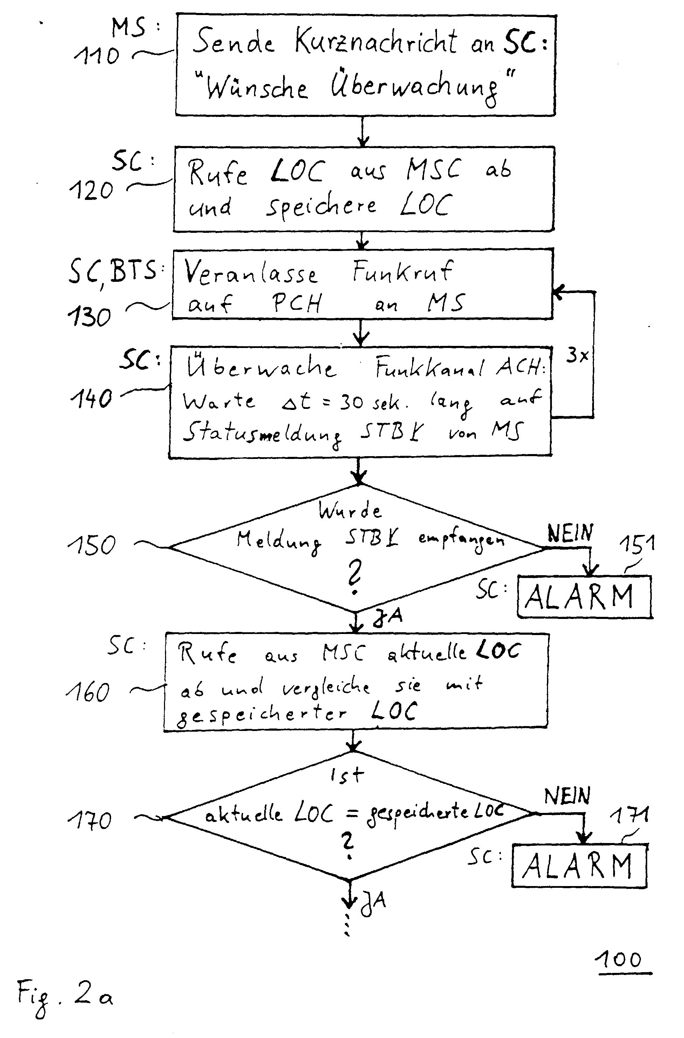

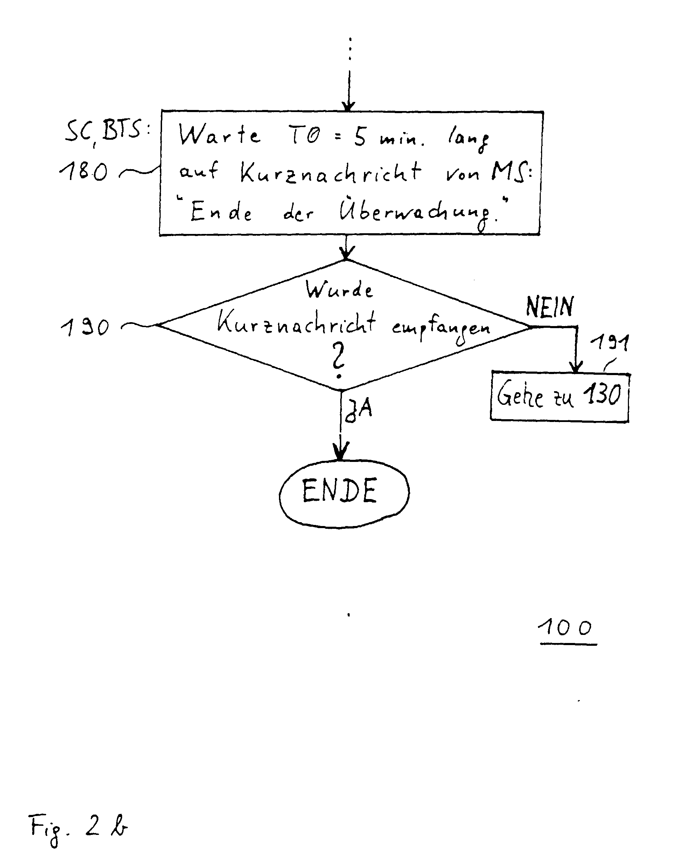

In Fig. 2a und b ist ein Ablaufdiagramm eines Verfahrens 100 zum Diebstahlschutz des in Fig. 1 gezeigten Kraftfahrzeugs CAR dargestellt. Das Verfahren wird von der Zentrale mittels einer Recheneinrichtung, hier eines Personal-Computers, gesteuert.

Zum Beginn des Verfahrens 100, d.h. vor Verlassen des geparkten Fahrzeugs CAR, sendet der Benutzer mittels der Funkendeinrichtung MS eine erste Meldung an die Zentrale SC des Funksystems (Schritt 110). Die Meldung ist hier eine sogenannte Kurznachricht, die über einen Funkkanal an die Funkfeststation BTS gesendet und von da aus an die Zentrale SC geleitet wird. Die Kurznachricht gibt an, daß eine von der Zentrale gesteuerte Überwachung des Kraftfahrzeuges gewünscht wird. Es ist auch denkbar diese erste Meldung zu sichern, d.h. sie etwa als codiertes Signal über einen Signalisierungskanal zu senden. Die Codierung würde dann etwa durch die Eingabe eines Zahlencodes erfolgen, den nur authorisierte Personen kennen.

Nach dem Eingang der ersten Meldung in der Zentrale SC, ermittelt diese den Aufenthaltsbereich LOC, in dem sich die Funkendeinrichtung MS befindet, d.h. in dem das Kraftfahrzeug geparkt wird. Dazu ruft die Zentrale SC in einem Schritt 120 die Kennung des Aufenthaltsbereiches LOC in der Funkvermittlungsstelle MSC ab. Die Kennung ist hier als LAI (Location Area Identity) in einer sogenannten Heimatdatei abgespeichert, auf die die Funkvermittlungsstelle MSC zugreift. Die Kennung des Aufenthaltsbereichs LOC wird nun auch in der Zentrale SC auf einer Festplatte gespeichert. Danach sendet die Zentrale SC eine Bestätigung des Überwachungsauftrags an den Benutzer der Funkendeinrichtung MS. Der Benutzer kann dann sein Kraftfahrzeug CAR verlassen, muß jedoch hier die Funkendeinrichtung MS für den weiteren Ablauf des Verfahrens 100 betriebsbereit im sog. Standby-Status halten.

In einem weiteren Schritt 120 veranlaßt die Zentrale SC einen Funkruf an die Funkendeinrichtung MS. Dieser Funkruf wird über einen Abwärts-Funkrufkanal PCH abgesetzt und erstreckt sich über den ganzen Aufenthaltsbereich, der zuletzt in der Heimatdatei registriert wurde, d.h. evtl. auch über zwei und mehr Funkzellen. Der Funkruf wird über die den Aufenthaltsbereich versorgenden Funkfeststationen, hier über die eine Funkfeststation BTS, an die Funkendeinrichtung MS gesendet. Ist diese betriebsbereit, so sendet sie eine Statusmeldung STBY an die Funkfeststation BTS zurück. Hier wird als Statusmeldung STBY ein sogenannter Random Access Burst auf einem Aufwärts-Funkkanal ACH von der Funkendeinrichtung MS an die Funkfeststation BTS zurückgesendet.

Die Zentrale überwacht diesen Aufwärts-Funkkanal ACH und wartet eine Wartezeit Δt lang auf die Statusmeldung STBY (Schritt 140). Die Schritte 130 und 140 werden hier dreimal wiederholt, um auch bei schlechten Funkausbreitungsbedingungen die Wahrscheinlichkeit für eine richtige Übertragung der Statusmeldung STBY zu erhöhen.

In einem danach folgenden Schritt 150 prüft die Zentrale SC, ob sie die Statusmeldung STBY empfangen hat. Ist dies nicht der Fall, so löst die Zentrale SC einen Alarm aus (Schritt 151). Der Alarm gilt beispielsweise für Wachpersonal, das zum Parkplatz des Kraftfahrzeuges CAR eilt, um festzustellen warum die Funkendeinrichtung MS nicht mehr betriebsbereit ist. Obwohl hier zur Auslösung des Alarms keine an die Funkendeinrichtung MS anzuschließenden Detektoren benötigt werden, können Fälle von Diebstahl, Manipulation, Vandalismus etc. sicher festgestellt werden.

Wurde jedoch die Statusmeldung STBY empfangen, so wird in einem weiteren Schritt 160 geprüft, ob das Kraftfahrzeug CAR sich noch an dem zu Beginn des Verfahrens 100 gespeicherten Aufenthaltsort LOC befindet. Dazu ruft die Zentrale SC aus der Funkvermittlungsstelle MSC die Kennung des aktuellen Aufenthaltsbereichs LOC ab (Schritt 160) und vergleicht sie mit der in der Zentrale SC gespeicherten Kennung (Schritt 170). Wurde das Kraftfahrzeug CAR gestohlen und aus dem Aufenthaltsbereich LOC entfernt, so entspricht die abgerufene Kennung nicht der gespeicherten Kennung. In diesem Fall wird gleichfalls Alarm ausgelöst (Schritt 171). Durch diese Maßnahme wird auch ohne Einsatz eines Navigationsgerätes, wie etwa eines GPS-Empfängers, eine Standortveränderung und somit ein Diebstahl des Kraftfahrzeugs CAR festgestellt. Darüberhinaus ist es denkbar die Kennung des neuen, aktuellen Aufenthaltsbereichs zur Suche des gestohlenen Kraftfahrzeuges zu verwenden.

Wurde keine Standortveränderung des Kraftfahrzeugs CAR festgestellt, so wartet die Zentrale eine Zeitdauer TO lang auf eine zweite Meldung der Funkendeinrichtung MS, in der als Kurznachricht der Wunsch des Benutzers mitgeteilt wird, die Überwachung des Kraftfahrzeugs CAR zu beenden. Die Zeitdauer TO ist so vorgegeben, daß sie etwa mindestens einer Kurzzeitparkdauer entspricht.

In einem Schritt 190 prüft die Zentrale SC, ob die obige Kurznachricht empfangen wurde. Dazu fragt die Zentrale SC in der sogenannten Kurznachrichtenzentrale (Short Message Service Centre) nach, ob dort die Kurznachricht innerhalb der letzten fünf Minuten (TO = 5 min.) eingegangen ist. Ist dies der Fall, so wird das Verfahren 100 abgeschlossen.

Ist keine Kurznachricht eingegangen, so wird ein Teil des Verfahrens ab dem Schritt 130 wiederholt. Demnach bestimmt die Zeitdauer TO, in welchen Zeitabständen die Zentrale SC den Aufwärts-Funkkanal ACH überwacht (Schritt 140) und prüft, ob die Funkendeinrichtung MS betriebsbereit ist (Schritt 150) und ob der Standort des Kraftfahrzeugs CAR unverändert ist (Schritt 170).

In dem oben beschriebenen Ausführungsbeispiel gibt die Statusmeldung an, daß die Funkendeinrichtung betriebsbereit ist. Es genügt demnach als Statusmeldung lediglich einen Funkimpuls ohne Nachrichteninhalt zu senden. Es ist auch denkbar, daß die Statusmeldung eine Nachricht mit Angaben enthält, die die Zentrale überwachen will, wie z.B. genauer Standort des Kraftfahrzeugs, Kilometerstand oder Füllstand des Kraftstofftanks. Mittels entsprechender an die Funkendeinrichtung anschließbare Detektoren, wie GPS-Empfänger, elektronischer Tachometer bzw. Füllstandsmesser können in der Zentrale diese Angaben ausgewertet werden, um bei Diebstahl eine Fahndung nach dem Kraftfahrzeug zu unterstützen.

Die Erfindung ist beispielsweise auch so ausführbar, daß die Zentrale eine Taxizentrale ist, die eine erfindungsgemäße Diebstahl-Überwachung durchführt. Im Alarmfall können die mit der Taxizentrale funkverbundenen Taxis informiert werden, um am Standort des Kraftfahrzeuges den Alarm zu überprüfen. Weiterhin können je nachdem, welcher Alarmfall festgestellt wurde (z.B. Manipulation, Diebstahl oder Vandalismus), verschiedene Alarmstufen (z.B. Überprüfung durch Taxifahrer, Wachpersonal bzw. Polizei) ausgelöst werden.

Weiterhin sind auch Ausführungsformen der Erfindung denkbar zum Schutz bewegter Objekte, wie etwa Gütercontainer oder Bahnwaggons, sowie zum Schutz nichtbewegter Objekte, wie etwa größere Kunst- oder Wertgegenstände. Die Erfindung leistet demnach einen sicheren Objektschutz in verschiedensten Einsatzbereichen und ist einfach ausführbar.

## Patentansprüche

1. Verfahren (100) zum Schützen eines Objektes (CAR), das mit einer für ein Funksystem (MRS) verwendbaren Funkendeinrichtung (MS) ausgestattet ist, bei dem
- von einer Zentrale (SC) des Funksystems ein Aufwärts-Funkkanal (ACH) überwacht wird, auf dem die Funkendeinrichtung (MS) in vorgebbaren Zeitabständen (TO) an eine Funkfeststation (BTS) des Funksystems (MRS) eine Statusmeldung (STBY) sendet (140), und bei dem
- ein Alarm ausgelöst wird, falls die Statusmeldung (STBY) nicht empfangen wurde (150, 151),
**dadurch gekennzeichnet**, daß zum Beginn des Verfahrens von der Funkendeinrichtung (MS) zu der Zentrale (SC) eine erste Meldung gesendet wird, die angibt, daß die von der Zentrale (SC) gesteuerte Überwachung gewünscht wird, und daß das Funksystem ein in Aufenthaltsbereiche unterteiltes Mobilfunksystem (MRS) ist,
bei dem das zu schützende Objekt ein bewegliches Objekt (CAR) ist, bei dem die Statusmeldung (STBY) den Aufenthaltsbereich (LOC) des beweglichen Objektes (CAR) angibt und bei dem von der Zentrale (SC) nach dem Empfang (150) der Statusmeldung (STBY) geprüft wird, ob sich der Aufenthaltsbereich (LOC) des beweglichen Objektes (CAR) verändert hat (170), und gleichfalls Alarm ausgelöst wird (Schritt 171).

2. Verfahren (100) nach Anspruch 1, dadurch gekennzeichnet, daß der Aufwärts-Funkkanal (ACH) eine vorgebbare Wartezeit (Δt) lang überwacht wird (140).

3. Verfahren (100) nach Anspruch 1, dadurch gekennzeichnet, daß vor der Überwachung des Aufwärts-Funkkanals (ACH) ein Funkruf über einen Abwärts-Funkkanal (PCH) an die Funkendeinrichtung (MS) veranlaßt wird (130), um die Aussendung der Statusmeldung (STBY) auszulösen.

4. Verfahren nach Anspruch 1, dadurch gekennzeichnet, daß die Funkendeinrichtung mit einem Navigationsgerät verbunden ist, bei dem die Statusmeldung den von dem Navigationsgerät ermittelten Standort des beweglichen Objekts angibt und bei dem von der Zentrale (SC) nach dem Empfang der Statusmeldung geprüft wird, ob sich der Standort des beweglichen Objektes verändert hat.

5. Verfahren (100) nach Anspruch 1, dadurch gekennzeichnet, daß die zum Beginn des Verfahrens von der Funkendeinrichtung (MS) zu der Zentrale (SC) gesendete erste Meldung eine gesicherte Meldung ist, die auf einem Signalisierungskanal oder auf einem Kurznachrichtenkanal gesendet wird (110).

6. Verfahren (100) nach Anspruch 1, dadurch gekennzeichnet, daß zum Abschluß des Verfahrens von der Funkendeinrichtung (MS) zu der Zentrale (SC) eine zweite Meldung, insbesondere eine zweite gesicherte Meldung, auf einem Signalisierungskanal oder auf einem Kurznachrichtenkanal gesendet wird (180, 190).

7. Funksystem (MRS) mit mindestens einer Funkfeststation (BTS) und einer damit verbundenen Zentrale (SC), die zum Schützen eines Objektes (CAR) einen Aufwärts-Funkkanal (ACH), auf dem eine sich am Objekt befindende Funkendeinrichtung (MS) in vorgebbaren Zeitabständen (TO) eine Statusmeldung (STBY) an die Funkfeststation (BTS) sendet, überwacht und die einen Alarm auslöst, falls sie die Statusmeldung (STBY) nicht empfängt,
**dadurch gekennzeichnet**, daß mittels der Funkendeinrichtung (MS) ein Benutzer an die Zentrale (SC) eine erste Meldung sendet, die angibt, daß der Benutzer die von der Zentrale gesteuerte Überwachung wünscht,
daß das Funksystem ein in Aufenthaltsbereiche unterteiltes zellulares Mobilfunksystem (MRS) ist, bei dem das zu schützende Objekt ein bewegliches Objekt (CAR) ist, bei dem die Statusmeldung (STBY) einen Aufenthaltsbereich (LOC) des beweglichen Objekts (CAR) angibt,
und daß die Zentrale (SC) nach dem Empfang der Statusmeldung (STBY) prüft, ob sich der Aufenthaltsbereich (LOC) verändert und gleichfalls Alarm auslöst.

8. Zentrale (SC) für ein Funksystem (MRS), die zum Schützen eines Objektes (CAR) einen Aufwärts-Funkkanal (ACH), auf dem eine sich am Objekt befindende Funkeinrichtung (MS) in vorgebbaren Zeitabständen (TO) eine Statusmeldung (STBY) an eine Funkfeststation (BTS) des Funksystems sendet, überwacht und die einen Alarm auslöst, falls sie die Statusmeldung (STBY) nicht empfängt,
**dadurch gekennzeichnet**, daß die Zentrale (SC) eine von der Funkendeinrichtung (MS) gesendete erste Meldung empfängt, die angibt, daß die Überwachung gewünscht wird,
daß das Funksystem ein in Aufenthaltsbereiche unterteiltes zellulares Mobilfunksystem (MRS) ist, bei dem das zu schützende Objekt ein bewegliches Objekt (CAR) ist, bei dem die Statusmeldung (STBY) einen Aufenthaltsbereich (LOC) des beweglichen Objekts (CAR) angibt,
und daß die Zentrale (SC) nach dem Empfang der Statusmeldung (STBY) prüft, ob sich der Aufenthaltsbereich (LOC) verändert und gleichfalls Alarm auslöst.

9. Funkendeinrichtung (MS) für ein Funksystem (MRS), die zum Schutz eines Objektes (CAR) diesem zugeordnet ist und die in vorgebbaren Zeitabständen (T0) eine Statusmeldung (STBY) an eine Funkfeststation (BTS) des Funksystems auf einem Aufwärts-Funkkanal (ACH) sendet, den eine Zentrale (SC) des Funksystems überwacht,
**dadurch gekennzeichnet**, daß mittels der Funkendeinrichtung (MS) ein Benutzer an die Zentrale (SC) eine erste Meldung sendet, die angibt, daß der Benutzer die von der Zentrale gesteuerte Überwachung wünscht,
daß das Funksystem ein in Aufenthaltsbereiche unterteiltes zellulares Mobilfunksystem (MRS) ist, bei dem das zu schützende Objekt ein bewegliches Objekt (CAR) ist, und daß die Funkendeinrichtung (MS) die Statusmeldung (STBY), die einen Aufenthaltsbereich (LOC) des beweglichen Objekts (CAR) angibt, an die Zentrale (SC) sendet, die dann prüft, ob sich der Aufenthaltsbereich (LOC) verändert und gleichfalls Alarm auslöst.

## Claims

1. A process (100) for protecting an object (CAR) which is equipped with a radio terminal device (MS) utilizable for a radio system (MRS) wherein
- a control centre (SC) of the radio system monitors an up radio channel (ACH) on which the radio terminal device (MS) sends a status message (STBY) to a fixed radio station (BTS) of the radio system (MRS) at predeterminable time intervals (TO) and wherein
- an alarm is triggered if the status message (STBY) has not been received (150, 151),
characterised in that at the start of the process the radio terminal device (MS) sends the control centre (SC) a first message stating that the monitoring controlled by the control centre (SC) is desired and that the radio system is a mobile radio communications system (MRS) subdivided into location areas, where the object to be protected is a moving object (CAR), the status message (STBY) indicates the location area (LOC) of the moving object (CAR), and following the reception (150) of the status message (STBY) the control centre (SC) checks whether the location area (LOC) of the moving object (CAR) has changed (170) and if so an alarm is triggered (step 171).

2. A process (100) according to Claim 1, characterised in that the up radio channel (ACH) is monitored for a predeterminable waiting time (At) (140).

3. A process (100) according to Claim 1, characterised in that before the monitoring of the up radio channel (ACH) a radio call to the radio terminal device (MS) is initiated via a down radio channel (PCH) (130) in order to trigger the transmission of the status message (STBY).

4. A process according to Claim 1, characterised in that the radio terminal device is connected to a navigation device, where the status message indicates the location of the moving object determined by the navigation device and following the reception of the status message the control centre (SC) checks whether the location of the moving object has changed.

5. A process (100) according to Claim 1, characterised in that a first message transmitted at the start of the process from the radio terminal device (MS) to the control centre (SC) is a protected message which is transmitted on a signalling channel or on a short-message channel (110).

6. A process (100) according to Claim 1, characterised in that at the end of the process a second message, in particular a second protected message, is transmitted from the radio terminal device (MS) to the control centre (SC) on a signalling channel or on a short-message channel (180, 190).

7. A radio system (MRS) with at least one fixed radio station (BTS) and a control centre (SC) which is connected to said fixed radio station and which, for the protection of an object (CAR), monitors an up radio channel (ACH) on which a radio terminal device (MS) arranged on the object transmits a status message (STBY) to the fixed radio station (BTS) at predeterminable time intervals (TO) and which triggers an alarm if it does not receive the status message (STBY), characterised in that by means of the radio terminal device (MS) a user sends the control centre (SC) a first message stating that the user desires the monitoring controlled by the control centre, that the radio system is a cellular mobile radio communications system (MRS) subdivided into location areas, where the object to be protected is a moving object (CAR) and the status message (STBY) indicates a location area (LOC) of the moving object (CAR), and that following the reception of the status message (STBY) the control centre (SC) checks whether the location area (LOC) has changed and if so triggers an alarm.

8. A control centre (SC) for a radio system (MRS) which, for the protection of an object (CAR), monitors an up radio channel (ACH) on which a radio device (MS) arranged on the object transmits a status message (STBY) to a fixed radio station (BTS) of the radio system at predeterminable time intervals (TO), and which triggers an alarm if it does not receive the status message (STBY), characterised in that the control centre (SC) receives a first message which is transmitted by the radio terminal device (MS) and which states that the monitoring is desired, that the radio system is a cellular mobile radio communications system (MRS) subdivided into location areas, where the object to be protected is a moving object (CAR) and the status message (STBY) indicates a location area (LOC) of the moving object (CAR), and that following the reception of the status message (STBY) the control centre (SC) checks whether the location area (LOC) changes and if so triggers an alarm.

9. A radio terminal device (MS) for a radio system (MRS) which, for the protection of an object (CAR), is assigned to said object and at predeterminable time intervals (TO) transmits a status message (STBY) to a fixed radio station (BTS) of the radio system on an up radio channel (ACH) which is monitored by a control centre (SC) of the radio system, characterised in that by means of the radio terminal device (MS) a user sends the control centre (SC) a first message stating that the user desires the monitoring controlled by the control centre, that the radio system is a cellular mobile radio communications system (MRS) subdivided into location areas, where the object to be protected is a moving object (CAR), and that the radio terminal device (MS) transmits the status message (STBY), which indicates a location area (LOC) of the moving object (CAR), to the control centre (SC) which then checks whether the location area (LOC) changes and if so triggers an alarm.

## Revendications

1. Procédé (100) pour protéger un objet (CAR) équipé d'un terminal de radiocommunication (MS) utilisable pour un système de radiocommunication (MRS), dans lequel
- un central (SC) du système de radiocommunication surveille un canal de radiocommunication montant (ACH) sur lequel le terminal de radiocommunication (MS) envoie (140) à intervalles (TO) pouvant être prédéterminés un message d'état (STBY) à une station fixe de radiocommunication (BTS) du système de radiocommunication (MRS), et dans lequel
- une alarme est déclenchée si le message d'état (STBY) n'a pas été reçu (150, 151),
caractérisé en ce qu'au début du procédé, un premier message est envoyé par le terminal de radiocommunication (MS) au central (SC) qui indique que la surveillance commandée par le central (SC) est souhaitée, et que le système de radiocommunication est un système de radiocommunication mobile (MRS) divisé en zones de séjour,
dans lequel l'objet à protéger est un objet mobile (CAR), dans lequel le message d'état (STBY) indique la zone de séjour (LOC) de l'objet mobile (CAR) et dans lequel le central (SC) vérifie à réception (150) du message d'état (STBY) si la zone de séjour (LOC) de l'objet mobile (CAR) a changé (170), et une alarme est également déclenchée (étape 171).

2. Procédé (100) selon la revendication 1, caractérisé en ce que le canal de radiocommunication montant (ACH) est surveillé (140) pendant un temps d'attente (Δt) pouvant être prédéterminé.

3. Procédé (100) selon la revendication 1, caractérisé en ce qu'avant la surveillance du canal de radiocommunication montant (ACH), un appel de radiocommunication à travers un canal de radiocommunication descendant (PCH) est provoqué (130) à destination du terminal de radiocommunication (MS) pour déclencher l'envoi du message d'état (STBY).

4. Procédé selon la revendication 1, caractérisé en ce que le terminal de radiocommunication est relié à un appareil de navigation, dans lequel le message d'état indique l'emplacement de l'objet mobile trouvé par l'appareil de navigation, et dans lequel le central (SC) vérifie à réception dû message d'état si l'emplacement de l'objet mobile a changé.

5. Procédé (100) selon la revendication 1, caractérisé en ce que le premier message envoyé au début du procédé par le terminal de radiocommunication (MS) au central (SC) est un message sécurisé qui est envoyé sur un canal de signalisation ou sur un canal de messages courts (110).

6. Procédé (100) selon la revendication 1, caractérisé en ce qu'un deuxième message est envoyé (180, 190) par le terminal de radiocommunication (MS) au central (SC) à la fin du procédé, en particulier un deuxième message sécurisé sur un canal de signalisation ou un canal de messages courts.

7. Système de radiocommunication (MRS) avec au moins une station fixe de radiocommunication (BTS) et un central (SC) relié à celle-ci, qui, pour protéger un objet (CAR), surveille un canal de radiocommunication montant (ACH), sur lequel un terminal de radiocommunication (MS) situé sur l'objet envoie à intervalles (T0) pouvant être prédéterminés un message d'état (STBY) à la station fixe de radiocommunication (BTS), et qui déclenche une alarme si elle ne reçoit pas le message d'état (STBY),
caractérisé en ce qu'au moyen du terminal de radiocommunication (MS), un utilisateur envoie un premier message au central (SC) qui indique que l'utilisateur souhaite la surveillance commandée par le central, et caractérisé en ce que le système de radiocommunication est un système de radiocommunication mobile cellulaire (MRS) divisé en zones de séjour, dans lequel l'objet à protéger est un objet mobile (CAR), dans lequel le message d'état (STBY) indique une zone de séjour (LOC) de l'objet mobile (CAR),
et en ce que le central (SC), vérifie à réception du message d'état (STBY) si la zone de séjour (LOC) a changé et déclenche également une alarme.

8. Central (SC) pour un système de radiocommunication (MRS) qui, pour protéger un objet (CAR), surveille un canal de radiocommunication montant (ACH), sur lequel un terminal de radiocommunication (MS) situé sur l'objet envoie à intervalles (T0) pouvant être prédéterminés, un message d'état (STBY) à une station fixe de radiocommunication (BTS), et qui déclenche une alarme s'il ne reçoit pas le message d'état (STBY),
caractérisé en ce que le central (SC) reçoit un premier message envoyé par le terminal de radiocommunication (MS) indiquant que la surveillance est souhaitée,
en ce que le système de radiocommunication est un système de radiocommunication mobile cellulaire (MRS) divisé en zones de séjour, dans lequel l'objet à protéger est un objet mobile (CAR), dans lequel le message d'état (STBY) indique une zone de séjour (LOC) de l'objet mobile (CAR), et en ce que le central (SC) vérifie à réception du message d'état (STBY) si la zone de séjour (LOC) a changé et déclenche également l'alarme.

9. Terminal de radiocommunication (MS) pour un système de radiocommunication (MRS), qui lui est affecté pour protéger un objet (CAR), et qui envoie à intervalles (TO) pouvant être prédéterminés un message d'état (STBY) à une station fixe de radiocommunication (BTS) du système de radiocommunication sur un canal de radiocommunication montant (ACH) que surveille un central (SC) du système de radiocommunication,
caractérisé en ce qu'au moyen du terminal de radiocommunication (MS), un utilisateur envoie un premier message au central (SC) indiquant que l'utilisateur souhaite la surveillance commandée par le central,
en ce que le système de radiocommunication est un système de radiocommunication mobile cellulaire (MRS) divisé en zones de séjour, dans lequel l'objet à protéger est un objet mobile (CAR), et en ce que le terminal de radiocommunication (MS) envoie le message d'état (STBY) indiquant une zone de séjour (LOC) de l'objet mobile (CAR) au central (SC), lequel vérifie ensuite si la zone de séjour (LOC) a changé et déclenche également l'alarme.
